Europäisches Patentamt

**European Patent Office**

Office européen des brevets

(11) Publication number: **0 298 168 B1**

# EUROPEAN PATENT SPECIFICATION

(45) Date of publication of patent specification: **03.07.91**   (51) Int. Cl.⁵: **B23Q 3/10**

(21) Application number: **87306062.8**

(22) Date of filing: **09.07.87**

(54) **Work clamping apparatus for a lateral type machining center.**

(43) Date of publication of application:
**11.01.89 Bulletin 89/02**

(45) Publication of the grant of the patent:
**03.07.91 Bulletin 91/27**

(84) Designated Contracting States:
**DE GB IT SE**

(56) References cited:
**DE-A- 1 502 356**
**DE-A- 2 153 463**
**GB-A- 2 123 721**
**US-A- 4 585 217**

**MACHINERY AND PRODUCTION ENGINEER-
ING, vol. 126, no. 3264, 25th June 1975, page
623, London, GB; "Multiple fixture with hy-
draulic clamping for a Milwaukee-Matic 200"**

(73) Proprietor: **AIOI SEIKI INC.**
**9, Konoike-Kaidoshita**
**Itami-shi Hyogo-ken(JP)**

(72) Inventor: **Kitaura, Ichiro**
**3-1, Mizugaoka 2-chome**
**Itami-shi Hyogo-ken(JP)**
Inventor: **Kawakami, Takayuki**
**41-1, aza Kinoshita Aramaki**
**Itami-shi Hyogo-ken(JP)**

(74) Representative: **Senior, Alan Murray et al
J.A. KEMP & CO 14 South Square Gray's Inn
London WC1R 5EU(GB)**

## Description

The present invention relates to a work clamping apparatus which holds in a plurality of vertical stages works to be machined by a lateral type machining center.

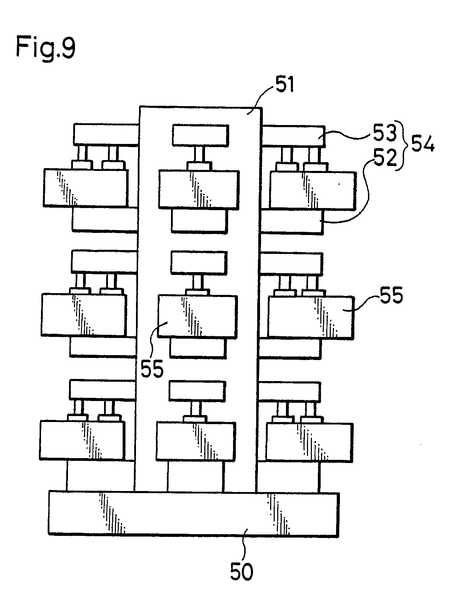

Conventionally, as a work clamping apparatus holding works machined by a lateral machining center in a plurality of vertical stages, for example, as shown in Fig. 9, clamping apparatuses 54 consisting of a reference block 52 and press block 53 are fixed in a plurality of vertical stages on each surface of a center block 51 erected from a base plate 50, and a work 55 is held by each clamping apparatus 54, and thereby a plurality of works 55 are fixed to the four surfaces of the center block 51.

In such a conventional work clamping apparatus, plural pairs of the reference block 52 and the press block 53 are disposed vertically on each surface of the center block 51, and therefore the press block 53 and the reference block 52 positioned above it are positioned between the upper and lower works 55, and the pitch of disposition of the works 55 is large. However, the range of mounting of the works in the center block 51 is limited within the range of movement of the tool of the machining center, and therefore in the above-described conventional example, the number of works fixed to each surface of the center block 51 cannot be made large.

Also, since the reference block 52 and the press block 53 are combined as a pair, the tightening force when tightening the work to fix it acts on the reference block 52 and the reaction force of tightening acts on the press block 53, the reference block 52 and the press block 53 are deformed elastically in a divergent shape, and the machining reference surface on the top surface of the reference block 52 becomes non-horizontal, and thereby an error is produced on the machining reference surfaces, resulting in a reduction in the machining precision.

Furthermore, since the reference block 52 and the press block 53 are fixed in a paired fashion to each surface of the center block 51, the machining reference surfaces on each surface of the center block 51 do not agree with one another unless the reference block 52 is mounted with a high precision on each surface of the center block 51, and therefore the machining precision cannot be improved.

Furthermore, in the case where the side surface of the work fixed between the reference block 52 and the press block 53 is milled or drilled, when the width of the work is small, the side surface of the reference block 52 is damaged by the tool, and a small-sized work having a small width and a small height cannot be machined by the tool. Also, when the width of the work is large and the work protrudes greatly outside the side surface of the reference block 52, the stability of the work becomes worse by a force acting from the tool.

Another example of a lateral type machining center is disclosed in "Machinery and Production Engineering, vol.l26, no. 3264, 25th June 1975, page 623, "Multiple fixture with hydraulic clamping for a Milwaukee-Matic 200". In this case, bolted to four opposite sides of a hollow steel octagon are work-holding units each of which has four "balconies" arranged vertically one above the other. The floor of each "balcony" has three locating stubs which engage with a workpiece and the ceiling of each "balcony" has three Hytec rams which are mounted facing downwards to clamp the workpieces in place. However, this design also has disadvantages. The work-holding units must be built to very high tolerances, their mounting on the central octagon is critical and it is very difficult to ensure agreement of the machining reference surfaces of adjacent mounting stations.

The object of the present invention is to provide a work clamping apparatus for a lateral type machining center which is improved in a manner that the number of works mounted in the direction of height is large, and the machining reference position of each work can be determined accurately.

A work clamping apparatus for a lateral type machining center in accordance with the present invention comprises a work clamping apparatus for a lateral type machining center comprising:

a base member to be attached to a table of a lateral type machining center,

a plurality of center spacer blocks,

a plurality of lateral positioning blocks, each comprising a center part corresponding in plan shape to said center spacer blocks and at least a pair of positioning arm parts symmetrically extending outwards from said center part,

the center spacer blocks and lateral positioning blocks being located alternatively upon one another in a pile on the base member with the positioning arm parts in register vertically,

a plurality of clamping apparatuses, each extending downwardly from a respective positioning arm part and comprising an upright cylinder and a clamp head driven by said cylinder to advance downward toward the positioning arm part below,

a plurality of replaceable spacers, each fixed detachably on the top surface of a respective positioning arm part for placing a workpiece, and

a plurality of positioning means, each positioning a said replaceable spacer so as to maintain a predetermined relative position between said positioning arm part and said replaceable spacers mounted thereon.

In accordance with the present invention, the center spacer blocks and the lateral positioning blocks are piled up alternatively, and works are disposed respectively between lateral positioning blocks. This means that only the lateral positioning block is disposed between the upper work and the lower work, and therefore the number of works mounted in the direction of height can be increased.

Also, in accordance with the present invention, except for the upper most lateral positioning block, and each work is placed on the top surface of each positioning arm part through the replaceable spacer. Accordingly, a reaction force of tightening the lower work and a tightening force on the upper work act on each of positioning arm parts, and by the balance of these forces, each positioning arm part is prevented from being deformed, and therefore a deviation of the machining reference surface of each work does not take place and the machining precision is raised.

Furthermore, in accordance with the present invention, the center spacer blocks and the lateral positioning blocks are piled up alternatively, and therefore by machining the parallelness of the both top and bottom surfaces of these blocks with high precision, the machining reference surface is set in common for four surfaces of the work clamping apparatus. Accordingly, since the positioning arm parts on the four surfaces of the work clamping apparatus provide the same machining reference surface, a reduction in the machining precision due to disagreement of the machining reference surface cannot take place.

In addition, in the present invention, the replaceable spacer for placing the work is installed detachably on the top surface of each positioning arm part, and therefore by using the replaceable spacer of a size corresponding to the width and height of the work, the side surface of the positioning arm part can be prevented from being damaged by the tool, machining of a small-sized work is made possible, and the stability of the work at machining can be raised. Furthermore, dent damage and wear of the positioning arm part is reduced, and therefore a reduction in the precision of the machining reference surface can be prevented.

The center spacer blocks and lateral positioning blocks may be fixed by bolts in sequence to the lower member, but to raise the workability of assembling, it is advantageous to fix all the center spacer blocks and the lateral positioning blocks to the base member with a plurality of common bolts penetrating through these blocks.

When the works to be machined are of the same type, the center spacer blocks of the same height are used. However, it is also possible that the height of the center spacer block is made different to fix the work of different height.

The number of positioning arm parts installed in the lateral positioning blocks is not limited to one pair, and it is also possible that two pairs of positioning arm parts are extended out in a cross shape from the center part.

An oil pressure supplying path to the oil pressure cylinder of each clamping apparatus can be piped outside the center spacer block or the lateral positioning block, but it is preferable to form it inside the center spacer block and the lateral positioning block to simplify the piping and reduce the number of parts. In this case, an oil pressure supplying path penetrating from the top surface to the bottom surface is formed in the center spacer block, and inside the lateral positioning block, an oil pressure supplying path penetrating from the top surface to the bottom surface of the center part and an oil pressure supplying path which branches from this oil pressure supplying path and goes to the oil pressure cylinder through the inside of each positioning arm part are formed.

These oil pressure supplying paths can be formed simply by drilling.

The size of the replaceable spacer is not limited particularly, but if allowed by the work size, it is preferably formed wider than the positioning arm part to prevent the lateral positioning block from being cut by the tool.

When the work to be machined is set on the top surface of the replaceable spacer, the work is set on the replaceable spacer by using this as a reference positioning standard, and therefore it is advantageous for raising the general purpose usability of the replaceable spacer to form regularly a plurality of screw holes or pin holes for mounting a member for positioning the work on the top surface of the replaceable spacer and enable a selective change of the position of mounting of the member for positioning the work corresponding to the work size.

An ascent/descent spacer driven downward by the clamp head can be spring-supported at the bottom surface side of each positioning arm part. Such an ascent/descent spacer is preferably replaceable like the replaceable spacer.

The number of clamping apparatuses installed in each positioning arm part has only to be determined properly in view of the size of the work, the size and strength of the lateral positioning block and the like. For example, a positioning means is required to position the replaceable spacer so as to keep a predetermined relative position to the positioning arm part to install a pair of clamping apparatus in each positioning arm part and set the work to be machined on the positioning arm part with a good precision through the replaceable spacer.

This positioning means is preferably constituted with at least a pair of orthogonal key grooves formed on the portions corresponding to each other of the bottom surface of the replaceable spacer and the top surface of the positioning arm part and a pair of keys fitted into these key grooves. However, pin holes and pins may be used in place of the key grooves and the keys, a coupling gear may be used, or the replaceable spacer may be positioned and fixed to the positioning arm part by a plurality of reamer bolts.

The present invention will be understood more clearly by description on a preferred embodiment in reference to the following drawings.

Fig. 1 is a front view of a work clamping apparatus for a lateral type machining center in accordance with the present invention,

Fig. 2 is a plan view of a work clamping apparatus of the machining center,

Fig. 3 is a perspective view of a lateral positioning block and a center spacer block of the work clamping apparatus,

Fig. 4 is a vertical cross-sectional view taken along line IV-IV in Fig. 2,

Fig. 5 is a vertical cross-sectional view taken along line V-V in Fig. 2,

Fig. 6 is a bottom view of a replaceable spacer,

Fig. 7 is a side view of the replaceable spacer,

Fig. 8 is an equivalent view of Fig. 5 in the case of machining a small-sized work, and

Fig. 9 is a front view of a conventional work clamping apparatus.

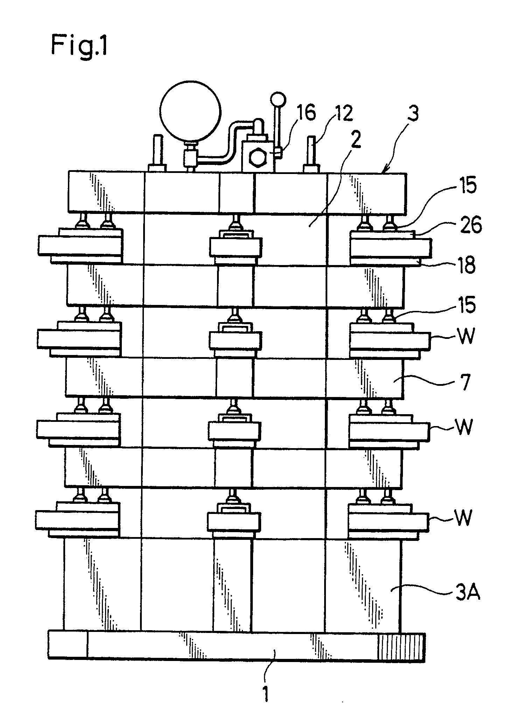

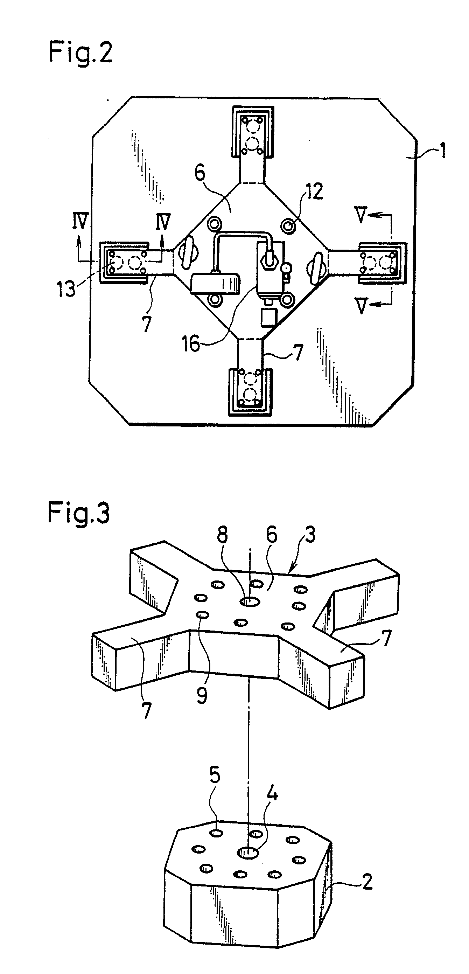

A work clamping apparatus for a lateral type machining center as shown in Fig. 1 and Fig. 2 is provided with a base plate 1 fixed to a rotary table of a lateral type machining center (not illustrated), a base spacer 3A placed thereon, and four center spacer blocks 2 and four lateral positioning blocks 3 which are laminated alternately on the base spacer 3A.

As shown in Fig. 3, the center spacer block 2 is formed in a short octagonal prism, and has an oil passage 4 vertically penetrating the center part thereof and bolt holes 5 arranged at the circumference thereof.

The lateral positioning block 3 comprises a center part 6 having the same plan shape as the center spacer block 2 and two pairs of positioning arm parts 7 extending sideward from the side parts thereof in a horizontal and symmetrical manner, and as the whole it is formed in a cross shape.

In the center parts of the lateral positioning block 3, an oil passage 8 vertically penetrating this center part and bolt holes 9 are formed so as to correspond to the oil passage 4 and the bolt holes 5 of the center spacer block 2.

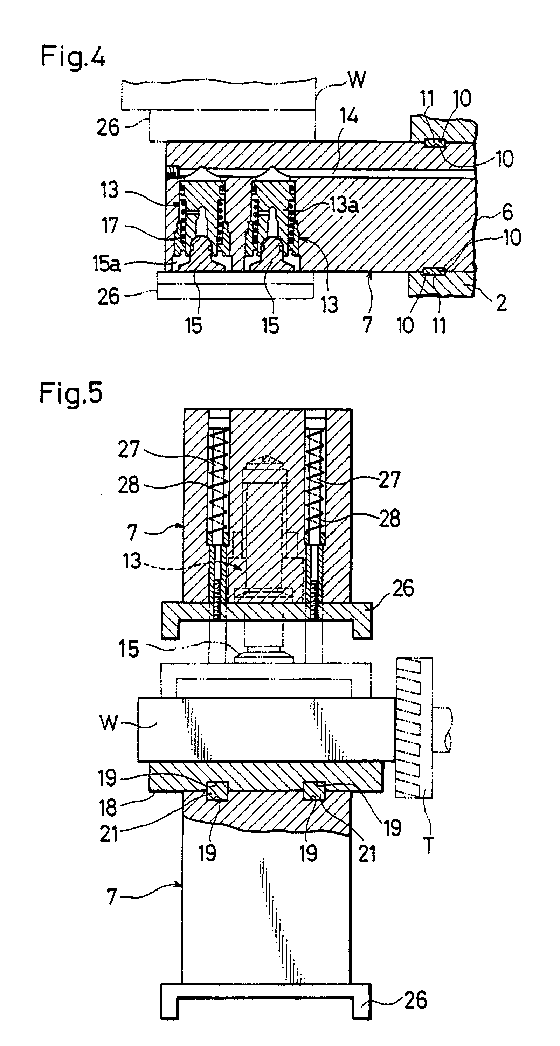

The center spacer blocks 2 hand the center parts 6 of the lateral positioning blocks 3 are stacked alternately on the base spacer 3A in a manner of superposing in the plan view. On the surfaces contacting each other of the center spacer block 2 and the lateral positioning block 3, as shown in Fig. 4, key grooves 10 corresponding to each other are formed, and by fitting a common key 11 into these key grooves 10, the relative position of the center spacer block 2 and the lateral positioning block 3 is positioned.

The base spacer 3A is formed in the same structure as the lateral positioning block 3 except that the height is larger. Accordingly, the relative position of the base spacer 3A and the center spacer block 2 of the lowermost stage is positioned also likewise the above-mentioned. The relative position of the base spacer 3A and the base plate 1 is also positioned likewise.

Thus, the base spacer 3A, the center spacer blocks 2 and the lateral positioning blocks 3 are positioned on the base plate 1 as described above, and thereafter they are fixed firmly by common bolts 12.

As shown in Fig. 4, in each positioning arm part 7 of the lateral positioning block 3, a pair of clamping apparatuses consisting of an oil cylinder 13 formed vertically inside the positioning arm 7 and a clamp head 15 fixed to the bottom end of a piston rod 13a thereof are installed. A pair of the oil pressure cylinders 13 are arranged in the direction of length of the positioning arm part 7, being installed so as to face downward. In the positioning arm part 7, an oil conducting passage 14 connecting each oil pressure cylinder 13 and center part 6 is formed. In addition, an external oil passage extending from an external oil pressure supplying source and the bottom end part of the oil passage 4 of the base spacer 3A are connected through an oil passage coupler, and supply and discharge of the pressurized oil to and from all the oil pressure cylinders 13 is controlled by a pressure oil supply/discharge change-over valve 16 fixed to the top surface of the center part 6 of the uppermost-stage lateral positioning block 3.

A coil spring 17 for returning the piston rod 13a is incorporated in the oil pressure cylinder 13, and after the clamping operation of the oil pressure cylinder 13 has been released, the clamp head 15 is stored in a recess 15a.

As shown in Fig. 4 and Fig. 5, at the nearby position under a pair of the clamp heads 15, an ascent/descent spacer 26 is installed which is driven downward by these clamp heads 15, and this ascent/descent spacer 26 is suspension-supported by the positioning arm part 7 through four pull-up bolts 27 and four springs 28.

In the case where this ascent/descent spacer 26 is formed wider than the positioning arm part 7, a tool T is caught by this ascent/descent spacer 26 before the positioning arm part 7 is damaged by the tool T, and thereby the positioning arm part 7 can be prevented from being damaged. The ascent/descent spacer 26 can be replaced simply by loosening the pull-up bolts 27, and therefore the expensive lateral positioning block 3 is not required to be replaced.

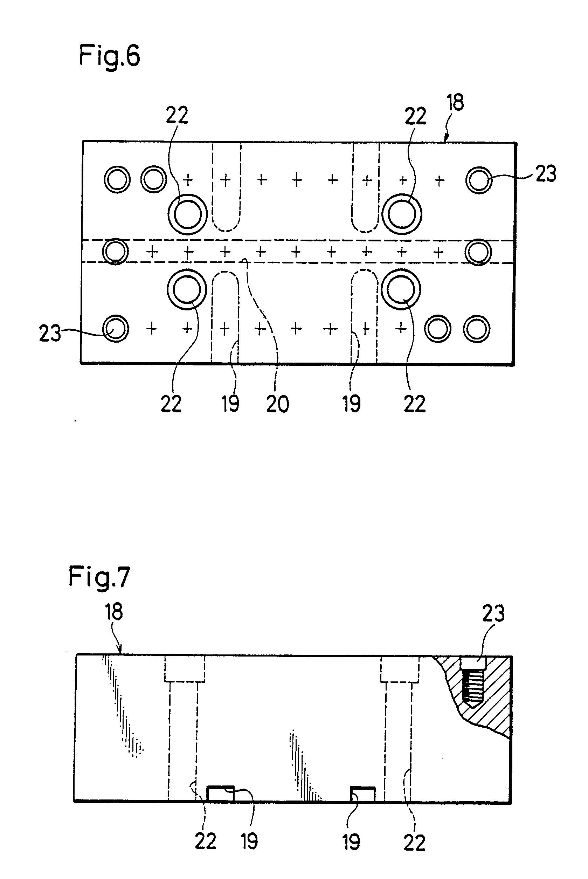

A replaceable spacers 18 is fixed detachably on the top surface of each positioning arm part 7 other than the uppermost one and on the top surface of the base spacer 3A. The relative position of this replaceable spacer 18 is positioned on the top surface of the positioning arm part 7 or the base spacer 3A, for example, by a positioning means as shown in Fig. 5 and Fig. 6, and thereafter the replaceable spacer 18 is fixed.

On the bottom surface of each replaceable spacer 18 and on the corresponding portion of the top surface of the positioning arm part 7, two key grooves 19 running in the direction of length of positioning arm part 7 and a key groove 20 orthogonal thereto are formed respectively, and by fitting a key 21 into these key grooves 19 and 20, the replaceable spacer 18 is positioned precisely at a predetermined position of the positioning arm part 7. The same is true of the base spacer 3A and the replaceable spacer 18 is installed thereon.

The replaceable spacer 18 positioned on the top surface of the positioning arm part 7 or the base spacer 3A using the positioning means is fixed to the positioning arm part 7 or the base spacer 3A, for examples, by four bolts (not illustrated). For this reason, four bolt holes 22 where a spot facing is formed to sink the bolt head lower than the top surface of the replaceable spacer 18 are bored vertically through the replaceable spacer 18.

Thus, the replaceable spacers 18 are positioned with high precision and fixed on the top surfaces of the positioning arm parts 7 and the base spacer, and therefore the work can be positioned with this replaceable spacer 18 taken as a reference. Note that for the positioning means positioning the replaceable spacer 18 at the positioning arm part 7, pin holes and pins, a coupling gear or the like can be used besides the key grooves 19 and 20 and keys 21.

Furthermore, to set the work at a predetermined position of the top surface of the replaceable spacer 18, the positioning means for positioning a work is required to be installed on the top surface of the replaceable spacer 18. This positioning means is desirably constituted so that a plurality of kinds of works of different sizes can be positioned for one replaceable spacer 18. Then, for example, as shown in Fig. 6, to mount positioning jigs or bolts on the top surface of the replaceable spacer 18, a plurality of screw holes 23 are formed regularly at a predetermined pitch. In addition, in Fig. 6, the screw holes 23 of 3 x 11 = 33 are formed in the replaceable spacer 18.

As mentioned above, the replaceable spacer 18 is positioned accurately relative to the positioning arm part 7, and work W can be positioned accurately on the top surface of the replaceable spacer 18, and therefore the work W can be positioned with high precision relative to the positioning arm part 7.

Also, the replaceable spacer 18 as shown in Fig. 5 is formed wider than the positioning arm parts 7. Accordingly, the positioning arm part 7 can be prevented from being damaged by the tool T.

The replaceable spacer 18 can be replaced with a replaceable spacer 18 suitable for the work W in a manner of removing it by loosening the bolts fixing it to the positioning arm part 7, and the expensive lateral positioning block 3 is not required to be replaced, and thereby the maintenance cost can be reduced.

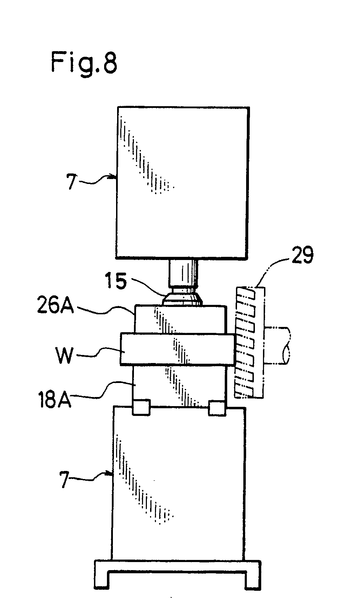

For example, in the case where a small-sized work W is machined, as shown in Fig. 8, a narrow and high replaceable spacer 18A is used, and the work is fixed by the clamp head 15 directly or using a small-sized spacer 26A.

## Claims

1. A work clamping apparatus for a lateral type machining center comprising:

   a base member (1) to be attached to a table of a
   lateral type machining center,
   
   a plurality of center spacer blocks (2),
   
   a plurality of lateral positioning blocks (3),
   each comprising a center part (6) corresponding to said center spacer blocks (2) and at least a pair of positioning arm parts (7) symmetrically extending outwards from said center part,
   
   the center spacer blocks and lateral positioning blocks being located alternately upon one another in a pile on the base member with the positioning arm parts in register vertically,
   
   a plurality of clamping apparatuses (15), each extending downwardly from a respective positioning arm part (7) and comprising an upright cylinder and a clamp head driven by said cylinder to advance downward toward the positioning arm part below,
   
   a plurality of replaceable spacers (18), each fixed detachably on the top surface of a respective positioning arm part for placing a workpiece, and
   
   a plurality of positioning means (19), each positioning a said replaceable spacer so as to maintain a predetermined relative position between said positioning arm part and said replaceable spacers mounted thereon.

2. A work clamping apparatus in accordance with claim 1, wherein said center spacer blocks and said lateral positioning blocks are fixed to said base member with a plurality of common bolts (12).

3. A work clamping apparatus in accordance with claim 1 or 2 wherein said center spacer blocks have different heights.

4. A work clamping apparatus in accordance with claim 1, 2 or 3 wherein two pairs of said positioning arm parts are provided on each of said lateral positioning blocks.

5. A work clamping apparatus in accordance with claim 1, 2, 3 or 4 wherein oil pressure supplying paths (14) to said oil pressure cylinder (13) are formed inside said center spacer blocks and said center parts and said positioning arm parts of said lateral positioning blocks.

6. A work clamping apparatus in accordance with any preceding claim wherein said replaceable spacer is formed wider than said positioning arm part.

7. A work clamping apparatus in accordance with any preceding claim wherein a plurality of screw holes or pin holes for mounting a member for positioning a workpiece are formed regularly on the top surface of said replaceable spacer.

8. A work clamping apparatus in accordance with any preceding claim wherein an ascent/descent spacer (26) driven downward by said clamp head and spring-supported is installed on the bottom surface of said positioning arm part.

9. A work clamping apparatus in accordance with claim 8, wherein said ascent/descent spacer is mounted detachably on said positioning arm part.

10. A work clamping apparatus in accordance with any preceding claim wherein a pair of clamping apparatuses are installed in each of said positioning arm parts.

11. A work clamping apparatus in accordance with any preceding claim wherein said positioning means is constituted with key grooves (19,20) and keys (21) between said positioning arm part and said replaceable spacer.

## Revendications

1. Dispositif de serrage d'une pièce d'ouvrage pour un tour d'usinage de type latéral, comportant:

une semelle (1) destinée à être fixée à un plateau d'un tour d'usinage de type latéral,

une pluralité de blocs entretoises centraux (2),

une pluralité de blocs de positionnement latéraux (3), comportant chacun une partie centrale (6) dont la forme en plan correspond auxdits blocs entretoises centraux (2) et au moins une paire de parties de bras de positionnement (7) s'étendant symétriquement vers l'extérieur depuis ladite partie centrale,

les blocs entretoises centraux et les blocs de positionnement latéraux étant superposés alternativement en un empilage sur la semelle, les parties de bras de positionnement étant alignées verticalement,

une pluralité de dispositifs de serrage (15), s'étendant chacun vers le bas à partir d'une partie de bras de positionnement respective (7) et comportant un vérin vertical et une tête de serrage actionnée par ledit vérin afin de progresser vers le bas vers la partie de bras de positionnement se trouvant au-dessous,

une pluralité d'entretoises remplaçables (18), fixées chacune de façon amovible sur la surface supérieure d'une partie de bras de positionnement respective pour mettre en place une pièce d'ouvrage, et

une pluralité de moyens de positionnement (19), positionnant chacun une desdites entretoises remplaçables de manière à maintenir une position relative prédéterminée entre ladite partie de bras de positionnement et lesdites entretoises remplaçables disposées sur celle-ci.

2. Dispositif de serrage d'une pièce d'ouvrage selon la revendication 1, dans lequel lesdits blocs entretoises centraux et lesdits blocs de positionnement latéraux sont fixés à ladite semelle par une pluralité de boulons communs (12).

3. Dispositif de serrage d'une pièce d'ouvrage selon la revendication 1 ou 2, dans lequel lesdits blocs entretoises centraux possèdent des hauteurs différentes.

4. Dispositif de serrage d'une pièce d'ouvrage selon la revendication 1,2 ou 3, dans lequel deux paires desdites parties de bras de positionnement sont prévues sur chacun desdits blocs de positionnement latéraux.

5. Dispositif de serrage d'une pièce d'ouvrage selon la revendication 1, 2, 3 ou 4, dans lequel des trajets d'alimentation en pression d'huile (14) audit vérin (13) à pression d'huile, sont formés à l'intérieur desdits blocs entretoises centraux et desdites parties centrales ainsi que desdites parties de bras de positionnement desdits blocs de positionnement latéraux.

6. Dispositif de serrage d'une pièce d'ouvrage selon l'une quelconque des revendications précédentes, dans lequel ladite entretoise remplaçable est réalisée plus large que ladite partie de bras de positionnement.

7. Dispositif de serrage d'une pièce d'ouvrage selon l'une quelconque des revendications précédentes, dans lequel une pluralité de trous de vis ou de trous de broche pour disposer un élément afin de positionner une pièce d'ouvrage sont pratiqués régulièrement sur la surface supérieure de ladite entretoise remplaçable.

8. Dispositif de serrage d'une pièce d'ouvrage selon l'une quelconque des revendications précédentes, dans lequel une entretoise ascendante/descendante (26) entraînée vers le bas par ladite tête de serrage et supportée par un ressort est installée sur la surface inférieure de ladite partie de bras de positionnement.

9. Dispositif de serrage d'une pièce d'ouvrage selon la revendication 8, dans lequel ladite entretoise ascendantedescendante est disposée de façon amovible sur ladite partie de bras de positionnement.

10. Dispositif de serrage d'une pièce d'ouvrage selon l'une quelconque des revendications précédentes, dans lequel une paire de dispositifs de serrage sont installés dans chacune desdites parties de bras de positionnement.

11. Dispositif de serrage d'une pièce d'ouvrage selon l'une quelconque des revendications précédentes, dans lequel lesdits moyens de positionnement sont constitués par des gorges (19,20) et des clavettes (21) entre ladite partie de bras de positionnement et ladite entretoise remplaçable.

**Ansprüche**

1. Werkstückspanneinrichtung für ein Waagerecht-Bearbeitungszentrum mit einem an einem Tisch eines Waagerecht-Bearbeitungszentrum anzubringenden Basisteilen (1), einer Mehrzahl von Zentrumsabstandsblöcken (2), einer Mehrzahl von Waagerecht-Positionierblöcken (3), von denen jeder ein in der Grundrißform den zentrumsabstandsblöcken entsprechendes Zentrumsteil (6) und mindestens ein paar von sich von dem Zentrumsteil symmetrisch nach außen erstreckenden positionierenden Armteil (7) aufweist, wobei die Zentrumsabstandsblöcke und die Waagerecht-Positionierblöcke abwechselnd übereinander in einem Stapel auf dem Basisteil angeordnet sind und die positionierenden Armteile senkrecht übereinander liegen, einer Mehrzahl von Klemmgeräten (15) von denen sich jedes abwärts von einem entsprechenden positionierenden Armteil (7) erstreckt und einen aufrechten Zylinder und einen durch den Zylinder angetriebenen Klemmkopf zum Abwärtsbewegen zu dem positionierenden Armteil darunter aufweist, einer Mehrzahl von auswechselbaren Abstandsstücken (18) von denen jedes entfernbar auf der oberen Oberfläche eines entsprechenden positionierenden Armteiles zum Aufbringen eines Werkstückes befestigt ist, und eine Mehrzahl von Positioniervorrichtungen (19), von denen jedes ein auswechselbares Abstandsstück so positioniert, daß eine vorbestimmte Relativposition zwischen dem positionierenden Armteil und dem darauf angebrachten austauschbaren Abstandsstück aufrechterhalten wird.

2. Werkstückspanneinrichtung nach Anspruch 1, bei dem die Zentrumsabstandsblöcke und die Waagerecht-Positionierblöcke an dem Basisteil mit einer Mehrzahl von gemeinsamen Bolzen (12) befestigt sind.

3. Werkstückspanneinrichtung nach Anspruch 1 oder 2, bei der die Zentrumsabstandsblöcke unterschiedliche Höhen aufweisen.

4. Werkstückspanneinrichtung nach Anspruch 1, 2 oder 3, bei der zwei Paare der positionierenden Armteile an jedem der Waagerecht-Positionierblöcke vorgesehen sind.

5. Werkstückspanneinrichtung nach Anspruch 1, 2, 3 oder 4, bei der Öldruckversorgungswege (14) zu dem Öldruckzylinder (13) im Inneren der Zentrumsabstandsblöcke und der Zentrumsteile und der positionierenden Armteile der Waagerecht-Positionierblöcke gebildet

13      **EP 0 298 168 B1**      14

sind.

6. Werkstückspanneinrichtung nach einem der vorhergehenden Ansprüche, bei der das auswechselbare Abstandsstück breiter gebildet ist als das Positionieren der Armteile.

7. Werkstückspanneinrichtung nach einem der vorhergehenden Ansprüche, bei der eine Mehrzahl von Schraubenlöchern oder Stiftlöchern zum Anbringen eines Teiles zum Positionieren eines Werkstückes gleichmäßig auf der oberen Oberfläche des auswechselbaren Abstandsstückes gebildet sind.

8. Werkstückspanneinrichtung nach einem der vorhergehenden Ansprüche, bei der ein von dem Klemmkopf abwärtsgetriebenes und federgelagertes aufsteigendes/absteigendes Abstandsstück (26) auf der Bodenoberfläche des positionierenden Armteiles angebracht ist.

9. Werkstückspanneinrichtung nach Anspruch 8, bei dem das aufsteigende/absteigende Abstandsstück auswechselbar auf dem positionierenden Armteil angebracht ist.

10. Werkstückspanneinrichtung nach einem der vorhergehenden Ansprüche, bei der ein Paar von Klemmgeräten in jedem der positionierenden Armteile angebracht ist.

11. Werkstückspanneinrichtung nach einem der vorhergehenden Ansprüche, bei der die Positioniervorrichtung mit Keilnuten (19,20 ) und Keilen (21) zwischen dem positionierenden Armteil und dem auswechselbaren Abstandsstück zusammengesetzt ist.

# Fig.1

**Fig.2**

**Fig.3**

## Fig.4

## Fig.5

Fig.6

22    22    18

23

23    22    19    20    19    22

Fig.7

18    23

22    19    19    22

Fig.8

Fig.9